# EUROPÄISCHE PATENTANMELDUNG

(11) **EP 0 766 018 A1**
(43) Veröffentlichungstag der Anmeldung: **02.04.1997**
(21) Anmeldenummer: 96115106.5
(22) Anmeldetag: 20.09.1996
(51) Int. Cl.: F16D 65/853, F16D 65/12

(54) **Antriebsstrang mit einem Motor, einem Getriebe und einer Bremse**

(30) Priorität: 28.09.1995 DE 19536092
(71) Anmelder: Voith Turbo GmbH & Co. KG, 89522 Heidenheim (DE)
(72) Erfinder: Adams, Werner, 74564 Crailsheim (DE)
(74) Vertreter: Weitzel, Wolfgang, Dr.-Ing. Patentanwalt

(57) **Zusammenfassung**

Die Erfindung betrifft einen Antriebsstrang
mit einem Motor (M);
mit einem Getriebe (G);
mit einer Bremseinheit;
das Getriebe (G) ist zwischen Motor und Bremseinheit angeordnet;
die Bremseinheit weist eine Bremsscheibe (3) auf;
die Bremsscheibe (3) ist flüssigkeitsgekühlt;
die Bremsscheibe (3) weist Zentrifugalkanäle (3,5) auf, mit denen eine Kühlflüssigkeit radial nach außen geleitet wird;
die Bremsscheibe (3) weist Zentripetalkanäle auf, mit denen die Kühlflüssigkeit radial nach innen geleitet wird.

## Beschreibung

Die Erfindung betrifft einen Antriebsstrang gemäß dem Oberbegriff von Anspruch 1.

Antriebsstränge dieser Art sind in großer Zahl bekanntgeworden. Nur beispielshalber wird auf DE 195 01 853.2 verwiesen.

Für solche Antriebsstränge gibt es Bremssysteme der unterschiedlichsten Art. Ein wichtiger Typus eines Bremssystems ist in US 5 358 077 beschrieben. Dieses Bremssystem umfaßt eine Bremsscheibe, die von einer Nabe getragen ist. Die Habe weist einen Kanal zum Zuführen und einen Kanal zum Abführen eines Kühlmittels auf. Die Bremsscheibe ist mit einer Vielzahl von radial angeordneten Ausnehmungen versehen, den sogenannten Kühlzellen. In jeder Kühlzelle befindet sich ein Röhrchen, das sich gleich der Kühlzelle in radialer Richtung erstreckt. Die einzelnen Röhrchen sind mit ihren radial inneren Enden an den Zufuhrkanal angeschlossen, während sie mit ihrem radial äußeren Bereich mit der Kühlzelle in leitender Verbindung stehen. Die Kühlzellen wiederum sind mit ihren radial inneren Bereichen an den Abfuhrkanal angeschlossen. Der Zufuhrkanal der Habe wird mit Kühlmittel beschickt. Dieses tritt in die radial inneren Enden der Röhrchen ein, strömt sodann durch Zentrifugalkraft radial nach außen, mündet dort in die betreffenden Kühlzellen und fließt in den Kühlzellen wieder radial einwärts zurück, um zum Abfuhrkanal in der Habe zu gelangen.

Gerade bei Antriebssträngen, die eine hohe Leistung übertragen müssen, ist es wichtig, ein effizientes Bremssystem zu verwenden, das hohe, beim Bremsen anfallende Wärmemengen abführen kann, und das demgemäß eine hohe Bremsleistung entwickeln kann. Dieses Erfordernis ist besonders dann wichtig, wenn es sich um ein Bremssystem für ein Kraftfahrzeug handelt, insbesondere für ein Nutzfahrzeug von hohem Transportgewicht.

Die Anordnung derartiger flüssigkeitsgekühlter Bremssysteme im Antriebsstrang ist jedoch problematisch, und zwar schon im Hinblick auf die Zufuhr und Abfuhr des flüssigen Kühlmittels.

Der Erfindung liegt die Aufgabe zugrunde, einen Antriebsstrang gemäß dem Oberbegriff von Anspruch 1 zu schaffen, bei dem die einzelnen Bauteile in optimaler Weise einander zugeordnet sind. Insbesondere sollen der Bauaufwand verringert, der Raumbedarf verkleinert und die Zugänglichkeit verbessert werden.

Diese Aufgabe wird durch die kennzeichnenden Merkmale von Anspruch 1 gelöst.

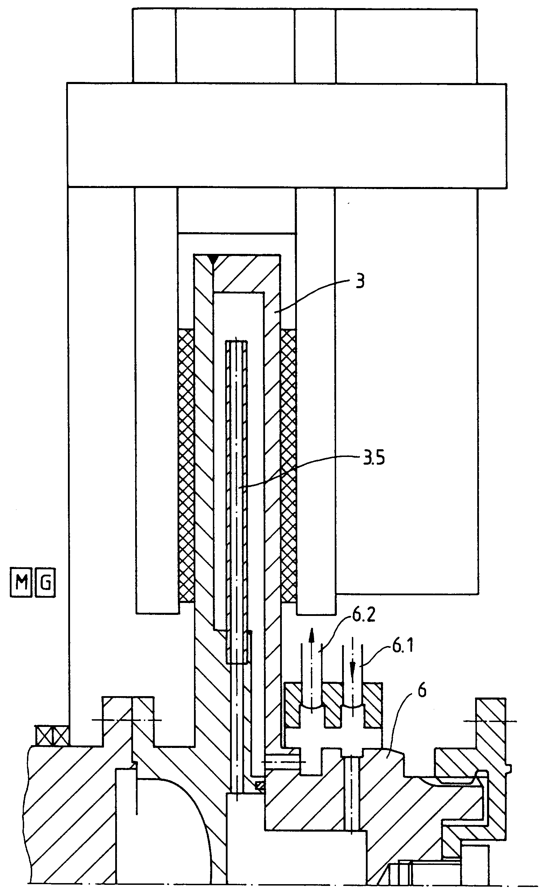

Die Erfindung ist anhand der Zeichnung näher erläutert.

Die Zeichnung stellt einen Antriebsstrang dar, mit den sehr schematisch gezeigten Elementen Motor M und Getriebe G sowie einer Bremseinheit. Bei diesem Antriebsstrang befindet sich somit das Getriebe G in der Mitte zwischen Motor M und der Bremseinheit.

Die Bremseinheit umfaßt hierbei wiederum eine Bremsscheibe 3. Diese bildet einen Hohlraum, in welchem eine Vielzahl von radial angeordneten Röhrchen 3.5 vorgesehen sind. Eine Nabe 6 weist einen Anschluß 6.1 zum Zuführen von Kühlflüssigkeit sowie einen Anschluß 6.2 zum Abführen von Kühlflüssigkeit auf. Die Röhrchen 3.5 sind an den Zufuhranschluß 6.1 angeschlossen, während die Anschlüsse 6.2 an den Raum angeschlossen sind, der die Röhrchen 3.5 umgibt, un in dem die Kühlflüssigkeit radial von außen nach innen strömt.

Die Bremseinheit kann auch anders als die hier dargestellte aufgebaut sein. Wesentlich ist, daß es sich dabei um eine gekühlte Bremseinheit handelt. Eine solche weist in jenem Falle eine Nabe mit einem Zufuhranschluß zum Zuführen und einem Abfuhranschluß zum Abführen von Kühlmedium auf. Die Bremsscheibe weist wenigstens einen Zentrifugalkanal auf, in dem die Kühlflüssigkeit von der Nabe aus radial nach außen strömt, ferner wenigstens einen Zentripetalkanal, in dem die Kühlflüssigkeit vom Umfang der Bremsscheibe her radial nach innen strömt. Der Zentrifugalkanal ist an den Zufuhranschluß und der Zentripetalkanal ist an den Abfuhranschluß angeschlossen.

## Patentansprüche

1. Antriebsstrang
1.1 mit einem Motor (M);
1.2 mit einem Getriebe (G);
1.3 mit einer Bremseinheit;
1.4 das Getriebe (G) ist zwischen Motor (M) und Bremseinheit angeordnet;
1.5 die Bremseinheit weist eine Bremsscheibe (3) auf;
1.6 die Bremsscheibe (3) ist flüssigkeitsgekühlt;
1.7 die Bremsscheibe (3) weist Zentrifugalkanäle auf, mit denen eine Kühlflüssigkeit radial nach außen geleitet wird;
1.8 die Bremsscheibe (3) weist Zentripetalkanäle auf, mit denen die Kühlflüssigkeit radial nach innen geleitet wird.

2. Antriebsstrang nach Anspruch 1, dadurch gekennzeichnet, daß die Bremsscheibe (3) mit der Getriebewelle drehfest verbunden ist.

3. Antriebsstrang nach Anspruch 1 oder 2, dadurch gekennzeichnet, daß der Bremsscheibe (3) ein Bremssattel (3.1) zugeordnet ist, der den Außenumfang der Bremsscheibe (3) umgreift.

4. Antriebsstrang nach einem der Ansprüche 1 bis 3, dadurch gekennzeichnet, daß eine der beiden Kupplungsscheiben als Schwungrad ausgebildet ist.

5. Antriebsstrang nach einem der Ansprüche 1 bis 4, dadurch gekennzeichnet, daß der Bremssattel (3.1) ortsfest ist.

6. Antriebsstrang nach einem der Ansprüche 1 bis 4, dadurch gekennzeichnet, daß der Bremssattel (3.1) schwimmend gelagert ist.
